Europäisches Patentamt

European Patent Office

Office européen des brevets

(19)

(11) Veröffentlichungsnummer: **0 299 325 B1**

(12) **EUROPÄISCHE PATENTSCHRIFT**

(45) Veröffentlichungstag der Patentschrift: **18.12.91**

(51) Int. Cl.⁵: **H02H 7/00, H01F 7/22**

(21) Anmeldenummer: **88110664.5**

(22) Anmeldetag: **04.07.88**

(54) **Aktiv geschirmter, supraleitender Magnet eines Kernspin-Tomographen.**

(30) Priorität: **17.07.87 DE 3723741**

(43) Veröffentlichungstag der Anmeldung:
**18.01.89 Patentblatt 89/03**

(45) Bekanntmachung des Hinweises auf die
Patenterteilung:
**18.12.91 Patentblatt 91/51**

(84) Benannte Vertragsstaaten:
**CH DE FR GB LI**

(56) Entgegenhaltungen:
**EP-A- 0 115 797**
**EP-A- 0 167 243**
**EP-A- 0 211 551**
**DE-A- 2 301 152**
**GB-A- 2 125 632**

(73) Patentinhaber: **SIEMENS AKTIENGESELL-
SCHAFT**
**Wittelsbacherplatz 2**
**W-8000 München 2(DE)**

(72) Erfinder: **Reichert, Thomas, Dipl.-Phys.**
**Täublingstrasse 37**
**W-8520 Erlangen(DE)**

## Beschreibung

Die Erfindung betrifft einen aktiv geschirmten, supraleitenden Magneten eines Kernspin-Tomographen mit einem Spulensystem, welches sich aus einem in Reihe geschalteten inneren und äußeren Spulensystem mit unterschiedlicher Magnetfeldrichtung zusammensetzt, wobei die beiden Spulensysteme mit einem supraleitenden Dauerstromschalter überbrückbar sind.

Für Untersuchungen der kernmagnetischen Resonanz an einem Untersuchungsobjekt ist unter anderem ein homogenes Grundmagnetfeld erforderlich. Durch das Grundmagnetfeld erhalten die Kernspins eines sich im Untersuchungsraum des Magneten befindenden Objektes eine Vorzugsrichtung. Die Einstrahlung eines Hf-Impulses und die Einwirkung von Gradientenmagnetfeldern bewirkt eine Auslenkung der Kernspins aus ihrer Vorzugsrichtung mit einer eine Ortsauflösung ermöglichenden Frequenz- und Phasencodierung. Nach Einwirkung des Hf-Impulses und der Gradientenmagnetfelder richten sich die Kernspins allmählich wieder in diese Vorzugsrichtung aus. Die dabei abgegebenen Signale werden von einer Antenne empfangen und einer Auswerteschaltung zugeführt. An einem nachgeschalteten Monitor wird ein Bild des Untersuchungsobjektes zur Anzeige gebracht.

Zur Erzeugung des homogenen Grundmagnetfeldes kann unter anderem ein supraleitendes Spulensystem, welches einen zylinderförmigen Untersuchungsraum umschließt, eingesetzt werden. Supraleitende Spulen sind insbesondere dann vorteilhaft, wenn mit hohen Grundmagnetfeldstärken gearbeitet werden soll. Die Feldstärke im Untersuchungsraum der supraleitenden Spulen beträgt üblicherweise zwischen 0,5 und 4 Tesla.

Supraleitende Spulen sind häufig aus mehreren Einzelspulen zusammengesetzt und können unbeabsichtigt in den normalleitenden Zustand übergehen (Quench). Eine damit verbundene Widerstandserhöhung bewirkt, daß die im Spulensystem gespeicherte Energie in der Spule bzw. in einem Teilbereich der Spule in Wärme umgesetzt wird. Infolge der geringen Wärmekapazität des Supraleiters erwärmt sich dieser sehr stark mit einer damit verbundenen weiteren Widerstandserhöhung. Neben der Erwärmung können elektrische Überspannungen zur Zerstörung der Isolation des Supraleiters führen.

Um dem vorzubeugen, sind Quenchschutzmaßnahmen, wie z.B. ohmsche Schutzwiderstände (DE-OS 23 01 152) oder Halbleiterdioden (DE-OS 16 14 964, DE-OS 17 64 369), vorgesehen, die zur Spannungsbegrenzung den einzelnen Spulen parallelgeschaltet werden. Im supraleitenden Betriebs-Zustand sind diese Quenchschutzmaßnahmen nicht stromführend. Geht eine Spule in den normalleitenden Zustand über, so übernimmt die entsprechende Quenchschutzmaßnahmen einen Teilstrom und begrenzt damit die an der Spule anliegende Spannung. Außerdem übernimmt sie einen Teil der in Wärme umgesetzten Energie. Da die im Spulensystem gespeicherte Energie bis zu einigen MJ betragen kann, ist es aus Gründen der Dimensionierung der Quenchschutzmaßnahme wünschenswert, das gesamte Spulensystem in den normalleitenden Zustand zu überführen, um damit die im Spulensystem gespeicherte und in Wärme umgesetzte Energie gleichmäßig auf das gesamte Spulensystem zu verteilen.

Maßnahmen zur induzierten Quenchausbreitung sind z.B. aus der EP-B-0 115 797 bekannt. Dabei wird den Heizelementen, die in gut wärmeleitendem Kontakt zur jeweiligen Spule angeordnet sind, die Spannung eines Netzwerkes von Quenchschutzwiderständen passiv zugeführt.

Ebenso kann den Heizelementen die Spannung eines Netzgerätes, welches von Quenchdetektoren angesteuert wird, aktiv zugeführt werden.

Durch die in den Heizelementen erzeugte Wärme wird das supraleitende Spulensystem in den normalleitenden Zustand überführt, wodurch eine gleichmäßig verteilte Energieumsetzung bewirkt wird.

Mit den hohen Feldstärken im Inneren des Spulensystems ist ein starkes äußeres Streufeld verbunden. Um nachteilige Auswirkungen, insbesondere auf magnetisierbare Körper und elektronische Anlagen, zu verhindern, muß das Streufeld auf geringe Feldstärken reduziert werden. Eine Möglichkeit der Abschirmung besteht darin, den das Spulensystem umgebenden Raum durch ferromagnetische Werkstoffe abzuschirmen. Nachteilig ist das hohe Gewicht dieser Abschirmungsmaßnahme. Eine weitere Möglichkeit der Abschirmung besteht darin, ein zweites Spulensystem vorzusehen, welches das erste umschließt und eine zum Grundmagnetfeld entgegengesetzte Feldrichtung aufweist. Ein solches aktiv geschirmtes, supraleitendes Spulensystem ist aus der US-PS 4 595 899 und der Applied Superconductivity Conference Baltimore, 28.9.-3.10.86: Hawksworth et al "Considerations In The Design Of MRI-Magnets With Reduced Stray Fields" bekannt.

Ein Vorteil der bekannten Ausführungsformen eines aktiv geschirmten, supraleitenden Spulensystems ist die wesentliche Reduzierung des magnetischen Streufeldes in der Umgebung des Magneten. Damit kann der Sicherheitsabstand um den Magneten wesentlich verringert werden mit einem damit verbundenen geringeren Raumbedarf einer NMR-Anlage.

Dabei können im Prinzip das innere und das äußere Spulensystem je einen eigenen oder einen gemeinsamen Stromkreis bilden.

Durch einen eigenen Stromkreis je Spulensystem werden zeitlich veränderliche äußere Magnetfelder innerhalb des jeweiligen Spulensystems durch eine Stromänderung ausgeglichen, weil in einem geschlossenen supraleitenden Stromkreis der magnetische Fluß $\Phi$ konstant ist, da das elektrische Feld $\vec{E}$ keine Komponente entlang des Supraleiters haben kann.

$$-\frac{\partial \Phi}{\partial t} = -\frac{\partial}{\partial t} \int_A \vec{B} \cdot d\vec{f} = \int_U \vec{E} \cdot d\vec{s} = 0$$

(A = Querschnittsfläche, U = Umfang des Stromkreises)

Eine Änderung der magnetischen Induktion $\vec{B}$ (der Feldstärke) wird daher durch eine Stromänderung im Supraleiter kompensiert. Im wesentlichen homogene äußere Magnetfeldänderungen, die z.B. durch bewegte magnetisierbare Körper, wie Autos und Straßenbahnen, verursacht werden, führen daher zu keiner Änderung des inneren homogenen Grundmagnetfeldes, wenn das innere Spulensystem so ausgelegt ist, daß es allein ein homogenes Magnetfeld erzeugt. Nachteil der getrennten Stromkreise ist, daß sich das Streufeld unzulässig erhöhen kann, wenn nur eines der beiden Spulensysteme in den normalleitenden Zustand übergeht.

Aus Sicherheitsgründen werden daher bei aktiv geschirmten Magneten beide Spulensysteme in Serie geschaltet. Beim Quench eines Spulensystems wird der Strom im gesamten Stromkreis und damit das Streufeld reduziert. Nachteil dieser Verschaltung ist, daß äußere Magnetfeldstörungen nicht mehr vom inneren Grundmagnetfeld abgeschirmt werden. Magnetfeldänderungen bewirken eine Stromänderung, die wegen der Reihenschaltung der Spulensysteme nur den magnetischen Fluß im Ringspalt zwischen den Spulensystemen konstant hält, weil nur dieser Ringspalt von einem geschlossenen supraleitenden Stromkreis umgeben ist. Damit ist die erforderliche Konstanz des Grundmagnetfeldes nicht mehr gewährleistet.

Aufgabe der Erfindung ist es, einerseits beim Quench ein erhöhtes Streufeld zu vermeiden und andererseits im Normalbetrieb äußere, zeitlich veränderliche Magnetfelder abzuschirmen.

Diese Aufgabe wird erfindungsgemäß dadurch gelöst, daß ein supraleitender Strombegrenzer mit geringem kritischen Strom eines der beiden Spulensysteme überbrückt und dadurch einen Differenzstrom zwischen innerem und äußerem Spulensystem führen kann und daß der supraleitende Strombegrenzer bei Überschreitung eines vorbestimmten Differenzstromes normalleitend wird und dadurch die Stromdifferenz zwischen innerem und äußerem Spulensystem begrenzt.

Vorteil der Erfindung ist, daß der Strombegrenzer geringe Stromdifferenzen zwischen innerem und äußerem Spulensystem zuläßt. Dadurch können Magnetfeldstörungen innerhalb jedes Spulensystems, insbesondere innerhalb des inneren, durch eine Stromänderung ausgeglichen werden. Überschreitet die Stromdifferenz zwischen den Spulensystemen den kritischen Strom des Strombegrenzers, so wird dieser normalleitend und begrenzt damit die Stromdifferenz zwischen den Spulensystemen. In beiden Spulensystemen fließt damit annähernd der gleiche Strom, so daß sich die Magnetfelder beider Spulensysteme nach außen hin auch im Quenchfall weitgehend aufheben. Ein unzulässig erhöhtes Streufeld ist damit ausgeschlossen.

Es ist vorteilhaft, wenn Mittel zur induzierten Quenchausbreitung vorgesehen sind zur Vorsorge gegen Zerstörung der Spulensysteme.

Vorteilhaft ist, wenn der supraleitende Strombegrenzer im normalleitenden Zustand einen hohen Widerstand pro Längeneinheit aufweist, um einen hohen Widerstand für Differenzströme zu erzielen und trotzdem Baugröße und Herstellungsaufwand gering zu halten.

Um auf gesonderte Herstellungsmaßnahmen für den Strombegrenzer verzichten zu können, ist es vorteilhaft, wenn als Strombegrenzer mindestens ein einzelnes Filament eines Supraleiters verwendet wird, das aus einem Supraleiter durch Abätzen der Matrix gewonnen wird.

Damit der Strombegrenzer selbst kein Magnetfeld erzeugt und damit eine störende Wechselinduktivität zu den Spulensystemen bildet, ist es vorteilhaft, wenn der supraleitende Strombegrenzer bifilar gewickelt wird.

Beim Umerregen des Magnetsystems ist es vorteilhaft, wenn Mittel vorgesehen sind, mit denen der Strombegrenzer in den normalleitenden Zustand gebracht werden kann.

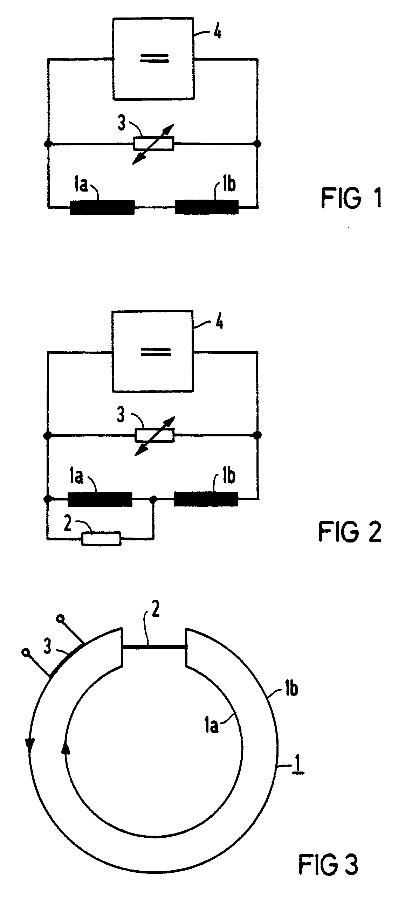

Ein Ausführungsbeispiel der Erfindung wird nachfolgend anhand der FIG 1 und 2 näher erläutert. Dabei zeigt:

FIG 1          ein bekanntes Ausführungsbeispiel eines aktiv geschirmten, supraleitenden Magneten,

3

EP 0 299 325 B1

FIG 2 und 3    ein Prinzipschaltbild eines erfindungsgemäßen Ausführungsbeispieles eines aktiv geschirmten, supraleitenden Magneten mit Strombegrenzer.

Im folgenden wird das innere Spulensystem mit 1a und das äußere Spulensystem mit 1b bezeichnet. Beide Spulensysteme 1a, 1b können sich aus mehreren Einzelspulen zusammensetzen.

Bei einer bekannten Anordnung gemäß der FIG 1 sind inneres Spulensystem 1a und äußeres Spulensystem 1b in Reihe geschaltet und mit einem supraleitenden Dauerstromschalter 3 kurzschließbar. Dabei wird dem Dauerstromschalter 3 ein Netzgerät 4 parallelgeschaltet. Das Spulensystem 1a,1b wird während des Ladevorganges mit einem stetig ansteigenden Strom des Netzgerätes 4 beaufschlagt. Dabei ist der Dauerstromsohalter 3 in den normalleitenden Zustand geschaltet und führt somit gegenüber dem aus den beiden Spulensystemen 1a,1b gebildeten supraleitenden Parallelzweig nur einen geringen konstanten Strom. Beim Erreichen der gewünschten Feldstärke wird der Dauerstromschalter 3 in den supraleitenden Zustand überführt, so daß der supraleitende Stromkreis über den Dauerstromschalter 3 geschlossen wird.

Die FIG 2 und 3 zeigen das Prinzipschaltbild eines erfindungsgemäßen Spulensystems 1a,1b mit einem Strombegrenzer 2, bei dem einerseits beim Quench das äußere Streufeld kleingehalten wird und andererseits im Normalbetrieb äußere Magnetfeldstörungen abgeschirmt werden.

Gemäß dem dargestellten Ausführungsbeispiel der Erfindung ist die Reihenschaltung aus einem inneren Spulensystem 1a und einem äußeren Spulensystem 1b über einen supraleitenden Dauerstromschalter 3 kurzschließbar. Ein Netzgerät 4 ist parallel zum Dauerstromschalter 3 und ein Strombegrenzer 2 parallel zum inneren Spulensystem 1a geschaltet. Das Spulensystem 1a,1b wird analog zur Beschreibung nach FIG 1 von dem Netzgerät 4 mit einem stetig ansteigenden Strom beaufschlagt. Solange der im Vergleich zu den Spulensystemen induktivitätsarme Strombegrenzer 2 supraleitend ist, fällt an ihm praktisch keine Spannung ab, so daß das Spulensystem 1a aufgrund seiner Induktivität keinen Strom übernehmen kann. Sobald der Strom über den Strombegrenzer 2 den kritischen Wert überschreitet, wird dieser normalleitend und das Spulensystem 1a übernimmt den Strom. Sobald der Strom bei einem konstanten Wert festgehalten wird, fällt am Spulensystem 1a keine Spannung mehr ab und der Strombegrenzer wird wieder supraleitenden, so daß jedes Spulensystem 1a,1b einen eigenen supraleitenden Stromkreis bildet, in dem die Flußerhaltung gilt. Magnetfeldänderungen werden im inneren Spulensystem 1a und im äußeren Spulensystem 1b durch entsprechende Stromänderungen im jeweiligen Stromkreis kompensiert. Die dabei entstehenden geringen Stromdifferenzen fließen über den Strombegrenzer 2.

Bei einem quenchbedingten Stromabbau in einem Spulensystem 1a,1b überschreitet die Differenz der Ströme im inneren 1a und äußeren Spulensystem 1b den kritischen Strom des Strombegrenzers 2, der dadurch normalleitend wird und die Stromdifferenz auf einen relativ kleinen Wert begrenzt. Damit ist ein wesentlich erhöhtes Streufeld ausgeschlossen.

Bei dem erfindungsgemäßen Spulensystem 1 mit Strombegrenzer 2 sind ebenfalls Quenchschutzmaßnahmen vorgesehen, die beim Quench einer Spule bzw. eines Spulensystems 1a,1b das gesamte Spulensystem 1 in den normalleitenden Zustand überführen. Aus Gründen der Übersichtlichkeit werden diese Quenchschutzmaßnahmen nicht in den FIG 2 und 3 dargestellt. Bei der dargestellten Lösung können die eingangs genannten Quenchschutzmaßnahmen mit Schutzwiderständen oder Halbleiterdioden nicht den einzelnen Spulensystemen 1a,1b zugeordnet werden. Bei einem Quench innerhalb eines Spulensystems 1a,1b können diese Quenchschutzmaßnahmen wie auch bei dem in FIG 1 dargestellten Stand der Technik einen Differenzstrom zwischen innerem 1a und äußerem Spulensystem 1b übernehmen. Dieser Differenzstrom kann zu einem unzulässig hohen Streufeld führen. Daher sollten bei dem erfindungsgemäßen aktiv geschirmten, supraleitenden Spulensystem 1a,1b mit Strombegrenzer 2 Mittel zur induzierten Quenchausbreitung, wie z.B. Heizelemente, vorgesehen sein, die beim Quench einer Spule entweder aktiv oder passiv, z.B. induktiv, angesteuert werden und damit das gesamte Spulensystem 1 in den normalleitenden Zustand überführen. Dabei kann vorteilhaft z.B. eine Schaltung gemäß der Patentanmeldung DE 37 10 519.1 eingesetzt werden.

Um die Zerstörung des Strombegrenzers 2 zu vermeiden, richtet sich der normalleitende Widerstand des Strombegrenzers 2 nach der beim Quench unter Berücksichtigung von Quenchschutzmaßnahmen maximal auftretenden Spannung. Geht der Strombegrenzer 2 quenchbedingt in den normalleitenden Zustand über, so kann beim Versagen der Quenchschutzmaßnahmen an diesem eine sehr hohe Spannung abfallen, die zur Zerstörung des Strombegrenzers 2 führen könnte. Eine Zerstörung des Strombegrenzers 2 bewirkt aber lediglich den Verlust der Abschirmung von Magnetfeldstörungen. Eine Erhöhung des Streufeldes wird ausgeschlossen, da dann beide Spulensysteme 1a,1b einen gemeinsamen Stromkreis bilden, in dem der gleiche Strom fließt.

Bei einer gewollten Stromänderung im gesamten Spulensystem über die vorgesehene Stromeinspeisemöglichkeit zur Änderung der Feldstärke, z. B. zum Auferregen, wird der Strombegrenzer 2, wie oben beschrieben, normalleitend, sobald die Stromdifferenz zwischen innerem 1a und äußerem Spulensystem 1b seinen kritischen Strom überschreitet und wieder supraleitend, wenn die Stromänderung beendet wird. Zur Vermeidung von Stromdifferenzen zwischen den Spulensystemen 1a,1b kann zusätzlich ein Heizer eingebaut werden, der den Strombegrenzer 2 durch Temperaturerhöhung vom Beginn bis zum Ende des Umerregungsvorganges normalleitend hält und damit eine genaue Feldeinstellung erleichtert.

**Patentansprüche**

1. Aktiv geschirmter, supraleitender Magnet eines Kernspin-Tomographen mit einem Spulensystem (1), welches sich aus einem in Reihe geschalteten inneren (1a) und äußeren Spulensystem (1b) mit unterschiedlicher Magnetfeldrichtung zusammensetzt, wobei die beiden Spulensysteme (1a,1b) mit einem supraleitenden Dauerstromschalter (3) überbrückbar sind, **dadurch gekennzeichnet,** daß ein supraleitender Strombegrenzer (2) mit geringem kritischen Strom eines der beiden Spulensysteme (1a,1b) überbrückt und dadurch einen Differenzstrom zwischen innerem (1a) und äußerem Spulensystem (1b) führen kann und daß der supraleitende Strombegrenzer (2) bei Überschreitung eines vorbestimmten Differenzstromes normalleitend wird und dadurch die Stromdifferenz zwischen innerem (1a) und äußerem Spulensystem (1b) begrenzt.

2. Aktiv geschirmter, supraleitender Magnet eines Kernspin-Tomographen nach Anspruch 1, **dadurch gekennzeichnet,** daß Mittel zur induzierten Quenchausbreitung vorgesehen sind.

3. Aktiv geschirmter, supraleitender Magnet eines Kernspin-Tomographen nach Anspruch 1 oder 2, **dadurch gekennzeichnet,** daß der supraleitende Strombegrenzer (2) im normalleitenden Zustand einen hohen Widerstand pro Längeneinheit aufweist.

4. Aktiv geschirmter, supraleitender Magnet eines Kernspin-Tomographen nach einem der Ansprüche 1 bis 3, **dadurch gekennzeichnet,** daß als supraleitender Strombegrenzer (2) mindestens ein einzelnes Filament eines Supraleiters verwendet wird, das aus einem Supraleiter durch Abätzen der Matrix gewonnen wird.

5. Aktiv geschirmter, supraleitender Magnet eines Kernspin-Tomographen nach einem der Ansprüche 1 bis 4, **dadurch gekennzeichnet,** daß der supraleitende Strombegrenzer ( 2) bifilar gewickelt wird.

6. Aktiv geschirmter, supraleitender Magnet eines Kernspin-Tomographen nach einem der Ansprüche 1 bis 5, **dadurch gekennzeichnet,** daß Mittel vorgesehen sind, mit denen der supraleitende Strombegrenzer (2) in den normalleitenden Zustand gebracht werden kann.

**Claims**

1. Actively shielded superconducting magnet of a nuclear spin tomograph having a coil system (1) which is composed of series-connected inner (1a) and outer coil systems (1b) with differing magnetic field directions, it being possible to bridge the two coil systems (1a, 1b) with a superconducting continuous current switch (3), characterised in that a superconducting current limiter (2) with a low critical current bridges one of the two coil systems (1a, 1b) and as a result can conduct a differential current between the inner (1a) and outer coil systems (1b) and in that when a predetermined differential current is exceeded the superconducting current limiter (2) becomes normal-conductive and as a result limits the current difference between inner (1a) and outer coil systems (1b).

2. Actively shielded superconducting magnet of a nuclear spin tomograph according to claim 1, characterised in that means are provided for induced quench propagation.

3. Actively shielded superconducting magnet of a nuclear spin tomograph according to claim 1 or 2, characterised in that the superconducting current limiter (2) has, in the normal-conducting state, a high resistance per unit length.

4. Actively shielded superconducting magnet of a nuclear spin tomograph according to one of the claims 1 to 3, characterised in that at least one single filament of a superconductor is used as the superconducting current limiter (2), which filament is obtained from a superconductor by etching the matrix.

5. Actively shielded superconducting magnet of a nuclear spin tomograph according to one of the claims 1 to 4, characterised in that the superconducting current limiter (2) is double-wound.

6. Actively shielded superconducting magnet of a nuclear spin tomograph according to one of the claims 1 to 5, characterised in that means are provided by which the superconducting current limiter (2) can be brought into the normal-conducting state.

**Revendications**

1. Aimant supraconducteur à blindage actif d'un tomographe à résonance magnétique nucléaire comportant un système de bobines (1), qui se compose d'un système à bobine intérieure (1a) et d'un système à bobine extérieure (1b), branchés en série et possédant des directions de champ magnétique différentes, les deux systèmes à bobines (1a,1b) pouvant être shuntés par un interrupteur supraconducteur de courant permanent (3), caractérisé par le fait qu'un limiteur supraconducteur de courant (2) est shunté par un faible courant critique de l'un des deux systèmes à bobines (1a,1b) et peut, de ce fait, véhiculer un courant différentiel entre le système à bobine intérieure (1a) et le système à bobine extérieure (1b), et que le limiteur supraconducteur de courant (2) est normalement conducteur lors du dépassement d'un courant différentiel prédéterminé et, de ce fait, limite la différence de courant entre le système à bobine intérieure (1a) et le système à bobine extérieure (1b).

2. Aimant supraconducteur à blindage actif d'un tomographe à résonance magnétique nucléaire suivant la revendication 1, caractérisé par le fait qu'il est prévu des moyens pour réaliser une propagation induite de la transition supraconductrice.

3. Aimant supraconducteur à blindage actif d'un tomographe à résonance magnétique nucléaire suivant la revendication 1 ou 2, caractérisé par le fait que le limiteur supraconducteur de courant (2) possède, à l'état normalement conducteur, une résistance élevée par unité de longueur.

4. Aimant supraconducteur à blindage actif d'un tomographe à résonance magnétique nucléaire suivant l'une des revendications 1 à 3, caractérisé par le fait qu'on utilise, comme limiteur supraconducteur de courant (2), au moins un filament individuel d'un supraconducteur, qui est obtenu à partir d'un supraconducteur, par élimination de la matrice par corrosion.

5. Aimant supraconducteur à blindage actif d'un tomographe à résonance magnétique nucléaire suivant l'une des revendications 1 à 4, caractérisé par le fait que le limiteur supraconducteur de courant (2) est enroulé selon un enroulement bifilaire.

6. Aimant supraconducteur à blindage actif d'un tomographe à résonance magnétique nucléaire suivant l'une des revendications 1 à 5, caractérisé par le fait qu'il est prévu des moyens permettant d'amener le limiteur supraconducteur de courant (2) à l'état normalement conducteur.

FIG 1

FIG 2

FIG 3